# EUROPEAN PATENT APPLICATION

(11) **EP 3 628 427 A1**
(43) Date of publication of application: **01.04.2020**
(21) Application number: 19165846.7
(22) Date of filing: 28.03.2019
(51) Int. Cl.: B23D 17/00, B23D 35/00, B23D 31/00, A62B 3/00, B23D 29/00

(54) **CUTTING DEVICE**

(30) Priority: 26.09.2018 WO PCT/JP2018/035758
(71) Applicant: Ogura & Co., Ltd., Ebina-shi, Kanagawa 243-0417 (JP)
(72) Inventor: KIMURA, Kiyoshi, Kanagawa, 243-0417 (JP)
(74) Representative: Ter Meer Steinmeister & Partner

(57) **Abstract**

A cutting device includes a cutting member 70 having a pair of cutting parts 71 and 73 rotatable around a common shaft 75 in a mutually approaching direction and / or in a mutually separating direction, and a driving unit (for example, a motor 16, a battery 17, and a hydraulic pump 20) that operates the cutting member 70 so that each of the cutting parts 71 and 73 rotates around the shaft 75 in the mutually approaching direction and / or in the mutually separating direction. Each of the cutting parts 71 and 73 of the cutting member 70 has an opposing blade part 72 and 74 respectively. The convex portions 72b and 74b have a shape such that convex portions 72b and 74b first contact the cylindrical rod when each of the cutting parts 71 and 73 rotates around the shaft 75 to move in the mutually approaching direction.

## Description

### TECHNICAL FIELD

The present invention relates to a cutting device having a cutting member for cutting a cylindrical rod such as a reinforcing rod.

### BACKGROUND ART

A portable hydraulic actuator is sometimes used in a rescue operation. An example of such a hydraulic actuator is disclosed in Japanese Patent Application Laid-Open No. 2010-280011 (JP2010-280011A) and the like. The hydraulic actuator disclosed in Japanese Patent Application Laid-Open No. 2010-280011 includes a battery, an oil pressure generating unit including an electric motor that receives a power supply from the battery and a hydraulic pump that is driven by the electric motor, and a head unit that can be detachably attached to the oil pressure generating unit and includes a tip tool driven by pressurized oil generated in the oil pressure generating unit. Various types of devices such as a cutter, a spreader, have been prepared as the tip tool included in the head unit allowing a great variety of operations to be performed by changing the head unit. Moreover, by making the oil pressure generating unit and the head unit separable from each other, portability is improved, and the load on an on-site worker can be reduced. By using the cutter as a head unit of such a hydraulic actuator, a portable hydraulic actuator can be used as a cutting device for cutting cylindrical rods such as reinforcing rods.

In the cutting device in which a cutter is used as a tip tool to cut a cylindrical rod such as a reinforcing rod, first, the cylindrical rod is placed between a pair of cutting parts, and then these cutting parts are moved close to each other to cut the cylindrical rod. Specifically, each of the cutting parts are capable of rotating around a common shaft, and, when cutting a cylindrical rod, first, the cylindrical rod is positioned at a base portion of these cutting parts, and then each of the cutting parts is rotated in a mutually approaching direction.

### SUMMARY OF INVENTION

When cutting a cylindrical rod by using the conventional cutting device having the cutting member for cutting the cylindrical rod such as the reinforcing rod, there is a problem that a loud cutting sound is produced. Moreover, cut pieces of the cylindrical rod can scatter for more than 10 meters, and there is a concern that these cut pieces may hit a nearby person. The mechanism for scattering of the cut pieces of the cylindrical rod and the generation of the loud cutting sound can be explained as below. That is, a bending moment occurs in each of the cutting parts because of the load applied on the cutting parts when cutting the cylindrical rod, and this bending moment causes the cutting parts to bend, and the cut pieces of the cylindrical rod scatter because of the force generated when the cutting parts return to their normal state. Moreover, a loud cutting sound is produced when the overlapping cutting parts hit each other.

The present invention has been made in consideration of the above discussion. One object of the present invention is to provide a cutting device in which, it is possible to prevent the occurrence of a loud cutting noise and scattering of the cut pieces by cutting a cylindrical rod in a plurality of stages.

A cutting device of the present invention includes: a cutting member that cuts a cylindrical rod, the cutting member having a pair of cutting parts rotatable around a common shaft in a mutually approaching direction and mutually separating direction; and a driving member that operates the cutting member such that each of the cutting parts rotates around the shaft in the mutually approaching direction or in the mutually separating direction, and a positioning portion that positions the cylindrical rod to be cut by contacting the cylindrical rod to be cut is arranged at a base portion of at least one of the pair of cutting parts, each of the cutting parts of the cutting member has a blade part that opposes a blade part of the other cutting part and at least one of the blade parts has a convex portion that protrudes toward the other blade part, and the convex portion has a shape such that the convex portion first contacts the cylindrical rod while the cylindrical rod has been positioned by being in contact with the positioning portion and then each of the cutting parts rotates around the shaft to move in the mutually approaching direction.

In the cutting device of the present invention, the blade part may have the convex portion includes a first cutting portion positioned away from a base portion of the pair of cutting parts than the convex portion and a second cutting portion located near the base portion of the pair of cutting parts than the convex portion, and the blade part may have a shape such that, when the cylindrical rod is positioned by being in contact with the positioning portion and each of the cutting parts is rotated around the shaft to move in the mutually approaching direction, after the convex portion contacts the cylindrical rod, a part of the cylindrical rod is cut by the second cutting portion, and then the remaining part of the cylindrical rod is cut by the first cutting portion.

In this case, the first cutting portion may be curved in shape and the second cutting portion is recessed with respect to the first cutting portion.

In the cutting device of the present invention, the convex portion of the blade part may have a shape such that when the cylindrical rod is positioned by being in contact with the positioning portion and each of the cutting parts is rotated around the shaft to move in the mutually approaching direction, after the convex portion contacts the cylindrical rod, the convex portion bites into the inside of the cylindrical rod.

Also, each blade part of the pair of blade parts may have the convex portion.

In the cutting device of the present invention the driving member may operate the cutting member by using pressurized oil.

### BRIEF DESCRIPTION OF DRAWINGS

FIG. 1 is a front view showing an appearance of a cutting device according to an embodiment of the present invention.
FIG. 2 is a cross-sectional view showing a configuration of the cutting device when the cutting device shown in FIG. 1 is cut along a line A-A.
FIG. 3 is a cross-sectional view showing a configuration when a cylindrical rod is cut with a cutting member of the cutting device from the state shown in FIG. 2.
FIG. 4 is a view showing an operation when the cylindrical rod is cut with the cutting member of the cutting device shown in FIG. 1.
FIG. 5 is a view showing a continuation of the operation when cutting the cylindrical rod with the cutting member of the cutting device shown in FIG. 1 following the state shown in FIG. 4.
FIG. 6 is a view showing a continuation of the operation when cutting the cylindrical rod with the cutting member of the cutting device shown in FIG. 1 following the state shown in FIG. 5.
FIG. 7 is a view showing a continuation of the operation when cutting the cylindrical rod with the cutting member of the cutting device shown in FIG. 1 following the state shown in FIG. 6.

### DESCRIPTION OF EMBODIMENT

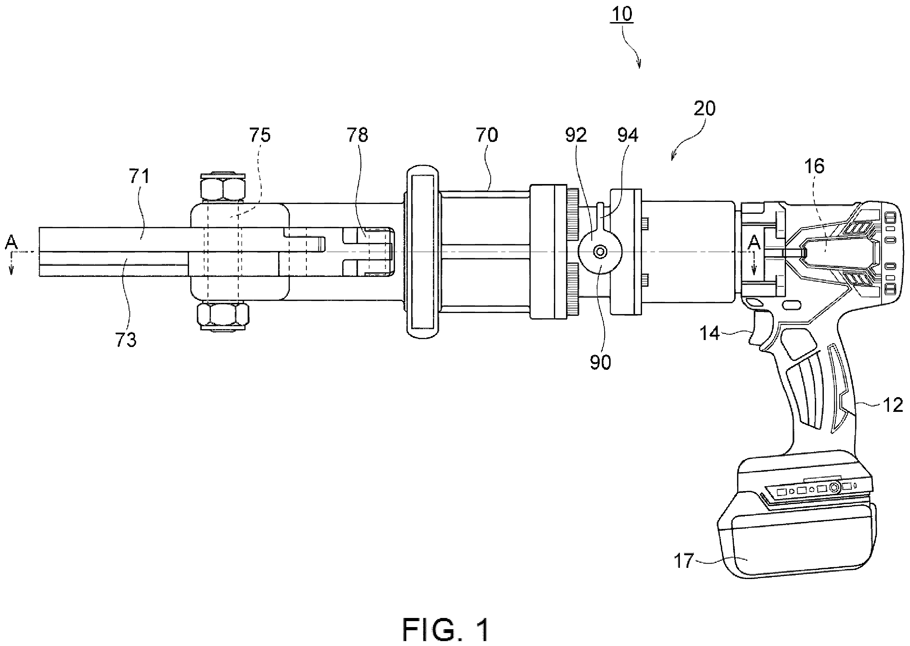

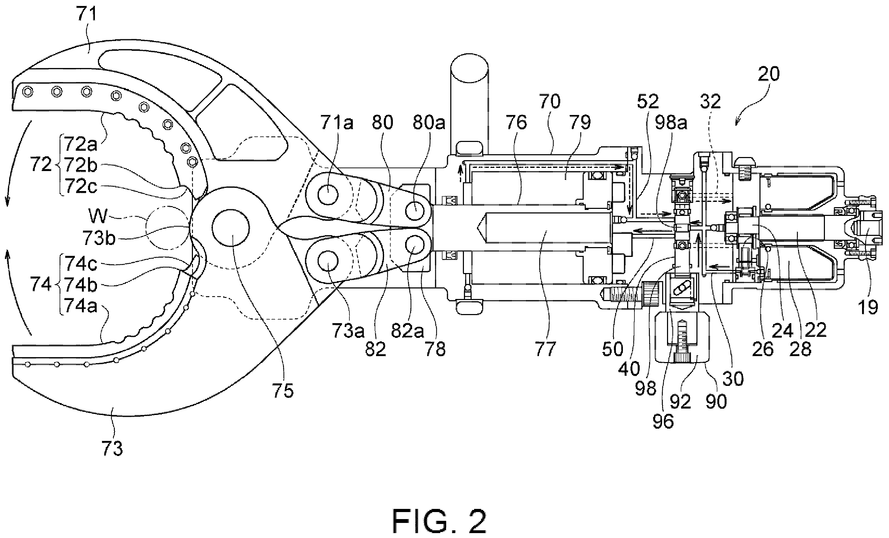

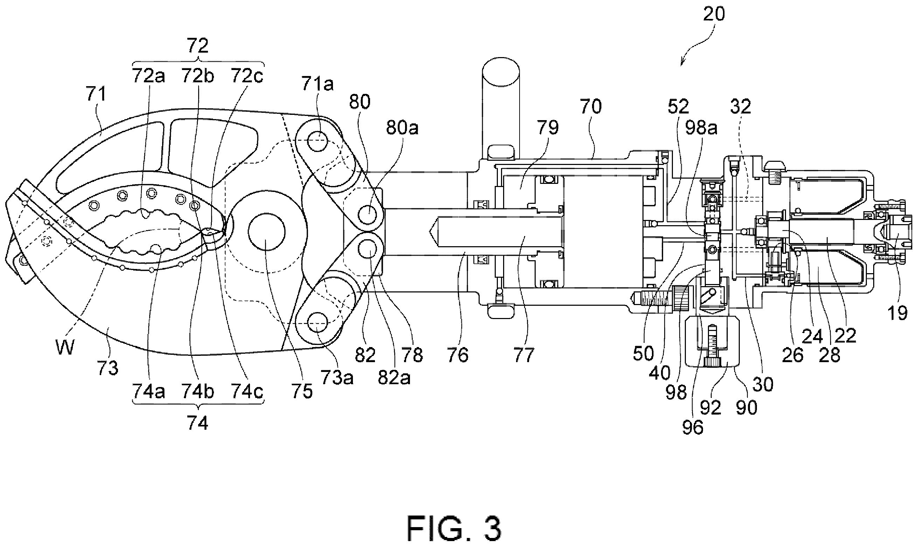

Exemplary embodiments of the present invention are explained below with reference to the accompanying drawings. A cutting device (hydraulic actuator) according to the present embodiment can be used in a rescue operation and the like to cut a cylindrical rod such as a reinforcing rod with a cutting member. FIGS. 1 to 7 are views showing the cutting device according to the present embodiment. In FIG. 2, a path of pressurized oil, which is sent from a hydraulic pump to the cutting member, is shown with a solid line and a path of return oil, which is returned from the cutting member to the hydraulic pump, is shown with a dotted line. Also, in FIGS. 2 and 3, in order to make it easy to see the oil passages of the pressurized oil and the return oil and a switching member arranged between the hydraulic pump and the cutting member, hatching, which is normally used to indicate a cross-section, of these oil passages and parts around the switching member has been omitted. Also, in FIGS. 2 to 7, the cylindrical rod such as the reinforcing rod cut with the cutting member of the cutting device is shown with a reference symbol W.

As shown in FIG. 1 and the like, a cutting device 10 according to the present embodiment includes a grip 12 that can be grasped with a hand by a worker of the cutting device 10, a switch 14 that can be operated by the worker with his finger when the worker has grasped the grip 12 with his hand, a motor 16 such as an electric motor, a battery 17 constituted by a secondary battery such as a lithium ion battery or a nickel hydrogen battery, a hydraulic pump 20 driven by the motor 16, and a cutting member 70 operated by the pressurized oil generated by the hydraulic pump 20. The hydraulic pump 20 and the cutting member 70 are integrated. In contrast, a combination body constituted by the integration of the hydraulic pump 20 and the cutting member 70 can be detached from the grip 12 and the motor 16. In this cutting device 10, when the worker who has grasped the grip 12 with his hand operates the switch 14 with his finger, electric power is supplied from the battery 17 to the motor 16, and the motor 16 starts operating. As a result, a not-shown rotary shaft attached to the motor 16 rotates. A not-shown inserting part is provided at a tip of the rotary shaft of the motor 16. This inserting part is inserted in a recess 19 formed in a later-explained rotatable member 22 of the hydraulic pump 20.

The hydraulic pump 20 includes an oil chamber 28, the cylindrical rotatable member 22, an eccentric member 24 attached to a tip of the rotatable member 22, and a piston 26 that moves up and down following the rotation of the eccentric member 24. The eccentric member 24 is eccentric with respect to an axis of the rotatable member 22. Bearings such as needle roller bearings are attached to an outer peripheral surface of the eccentric member 24. The piston 26 is constantly pressed toward an outer peripheral surface of the bearing by a not-shown spring. Therefore, as the rotatable member 22 rotates, eccentric rotational movement of the eccentric member 24 and the bearing with respect to the axis of the rotatable member 22 causes the piston 26 to move up and down. Accordingly, the pressurized oil is sent from the oil chamber 28 to the later-explained cutting member 70, and the cutting member 70 is operated.

As shown in FIGS. 1 to 3, a plurality of oil passages 30, 32, 50, and 52 are arranged inside the cutting device 10. These oil passages are used to send the pressurized oil from the oil chamber 28 of the hydraulic pump 20 to the cutting member 70, and to return the oil from the cutting member 70 to the oil chamber 28. The first oil passage 30 among the oil passages 30, 32, 50, and 52 is a feed pipe through which the pressurized oil sent from the oil chamber 28 of the hydraulic pump 20 flows to the cutting member 70, and the second oil passage 32 is a return pipe through which the return oil returned from the cutting member 70 flows to the oil chamber 28. Each of the first oil passage 30 and the second oil passage 32 communicate with a hole 40 into which a spool 98 of a switching member 90 is inserted. The third oil passage 50 among the oil passages 30, 32, 50, and 52 is a feed pipe that feeds the pressurized oil to an oil chamber 77 provided inside a piston part 76 of the cutting member 70, and the fourth oil passage 52 is a feed pipe that feeds the pressurized oil to an oil chamber 79 provided outside the piston part 76. The third oil passage 50 and the fourth oil passage 52 also communicate with the hole 40 into which the spool 98 of the switching member 90 is inserted. The switching member 90 is used to switch the oil passage communicating with each of the first oil passage 30 and the second oil passage 32 between the third oil passage 50 and the fourth oil passage 52.

A configuration of the switching member 90 will be briefly explained below with reference to FIGS. 1 to 3. The switching member 90 includes a substantially disk-shaped operating knob 92 that is operated by the worker, a substantially cylindrical operating knob attaching part 96 to which the operating knob 92 is attached, and the elongated and cylindrical spool 98 that is inserted into a hollow portion of the operating knob attaching part 96. When the operating knob 92 is rotated by a worker, the spool 98 moves in a direction that is orthogonal (specifically, up and down direction in FIGS. 2 and 3) to the direction in which the operating knob 92 is turned (that is, the direction along the paper surface of FIG. 1). The operating knob 92 has a protruding part 94 that the worker can pinch with his fingers. The worker can pinch the protruding part 94 with his fingers and turn the protruding part 94 to turn the operating knob 92. When the operating knob 92 is positioned at a later-explained neutral position, the protruding part 94 is directed straight upward as shown in FIG. 1. When the worker rotates the operating knob 92 by rotating the protruding part 94 in the left direction or in the right direction in FIG. 1, the operating knob 92 is positioned at an advanced position or a retreated position, respectively. Grooves 98a are formed in the spool 98. A hole is formed in some of the grooves 98a. A hollow portion extending along a shaft direction of the spool 98 is formed inside the spool 98. The hole formed in the grooves 98a communicates with this hollow portion.

A configuration of the cutting member 70 will be described below in detail with reference to FIGS. 2 and 3. The cutting member 70 includes a pair of cutting parts 71 and 73, each of which is rotatable around a shaft 75, a base part 78, and the piston part 76 to a tip part of which the base part 78 is attached. The first cutting part 71 and the base part 78 are connected to each other by a connecting part 80. More specifically, the first cutting part 71 is connected to the connecting part 80 so as to be rotatable with respect to the connecting part 80 around a shaft 71a provided at a base end part thereof. Moreover, the connecting part 80 is connected to the base part 78 so as to be rotatable with respect to the base part 78 around a shaft 80a provided at a base end portion thereof. Similarly, the second cutting part 73 and the base part 78 are connected to each other by a connecting part 82.

More specifically, the second cutting part 73 is connected to the connecting part 82 so as to be rotatable with respect to the connecting part 82 around a shaft 73a provided at the base end part thereof. Further, the connecting part 82 is connected to the base part 78 so as to be freely rotatable with respect to the base part 78 around a shaft 82a provided at a base end portion thereof. As a result, when the base part 78 moves from the state shown in FIG. 2 to the left side in FIG. 2, the first cutting part 71 is pushed by the connecting part 80 rotatably connected to a proximal end of the base part 78 whereby the first cutting part 71 rotates around the shaft 75 in the direction of an arrow shown in FIG. 2. Similarly, when the base part 78 moves from the state shown in FIG. 2 to the left side in FIG. 2, the second cutting part 73 is pushed by the connecting part 82 rotatably connected to the proximal end of the base part 78 whereby the second cutting part 73 rotates around the shaft 75 in the direction of an arrow shown in FIG. 2. On the other hand, when the base part 78 moves from the state shown in FIG. 3 to the right side in FIG. 2, a proximal end of each of the cutting parts 71 and 73 is pulled by each of the connecting parts 80 and 82 rotatably connected to the proximal end of the base part 78 whereby the cutting parts 71 and 73 are rotated around the shaft 75 in a mutually separating direction (that is, in a direction opposite to the arrows shown in FIG. 2).

As shown in FIG. 2 and FIG. 3, a blade part 72 for cutting the cylindrical rod is arranged in the first cutting part 71 at a position facing the second cutting part 73. The blade part 72 includes a first cutting portion 72a, a second cutting portion 72c, and a convex portion 72b located between the first cutting portion 72a and the second cutting portion 72c. The first cutting portion 72a has a substantially arc shape, and the convex portion 72b is located at an end portion of the first cutting portion 72a. The second cutting portion 72c is recessed with respect to the first cutting portion 72a that has the substantially arc shape. The length of the second cutting portion 72c is generally smaller than the diameter of the cylindrical rod to be cut by the cutting member 70 of the cutting device 10 of the present embodiment. As shown in FIG. 2, the convex portion 72b protrudes toward a later-explained blade part 74 of the second cutting part 73. The convex portion 72b, when the first cutting part 71 rotates around the shaft 75 in the direction of the arrow shown in FIG. 2, has a shape such that the convex portion 72b advances more than the first cutting portion 72a and the second cutting portion 72c.

The blade part 74 for cutting the cylindrical rod is provided in the second cutting part 73 at a position facing the first cutting part 71. The blade part 74 includes a first cutting portion 74a, a second cutting portion 74c, and a convex portion 74b located between the first cutting portion 74a and the second cutting portion 74c. The first cutting portion 74a has a substantially arc shape, and the convex portion 74b is located at an end portion of the first cutting portion 74a. The second cutting portion 74c is recessed with respect to the first cutting portion 74a that has the substantially arc shape. The length of the second cutting portion 74c is generally smaller than the diameter of the cylindrical rod to be cut by the cutting member 70 of the cutting device 10 of the present embodiment. As shown in FIG. 2, the convex portion 74b protrudes toward the blade part 72 of the first cutting part 71. The convex portion 74b, when the second cutting part 73 rotates around the shaft 75 in the direction of the arrow shown in FIG. 2, has a shape such that the convex portion 74b advances more than the first cutting portion 74a and the second cutting portion 74c.

A positioning portion 73b is formed at the base portion of the second cutting part 73. Positioning of the cylindrical rod to be cut is achieved when the cylindrical rod contacts the positioning portion 73b. When cutting the cylindrical rod with the cutting parts 71 and 73, first, the cylindrical rod is made to contact the positioning portion 73b while both the cutting parts 71 and 73 are open thereby positioning the cylindrical rod by using the positioning portion 73b. Then, while the cylindrical rod is in contact with the positioning portion 73b, when each of the cutting parts 71 and 73 rotates around the shaft 75 in a mutually approaching direction, the cylindrical rod is cut in the state in which it is positioned by the positioning portion 73b. Note that, the positioning portion, which is used to position the cylindrical rod to be cut when the cylindrical rod to be cut is in contact thereof, can be arranged at the base portion of the first cutting part 71 rather than the second cutting part 73. Alternatively, the positioning portion, which is used to position the cylindrical rod to be cut when the cylindrical rod to be cut is in contact thereof, can be arranged at the base portion of each of the first cutting part 71 and the second cutting part 73.

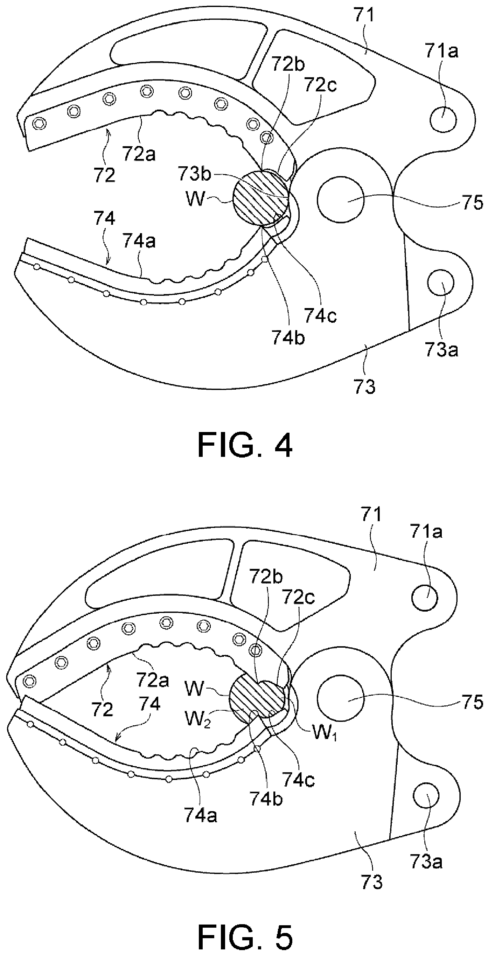

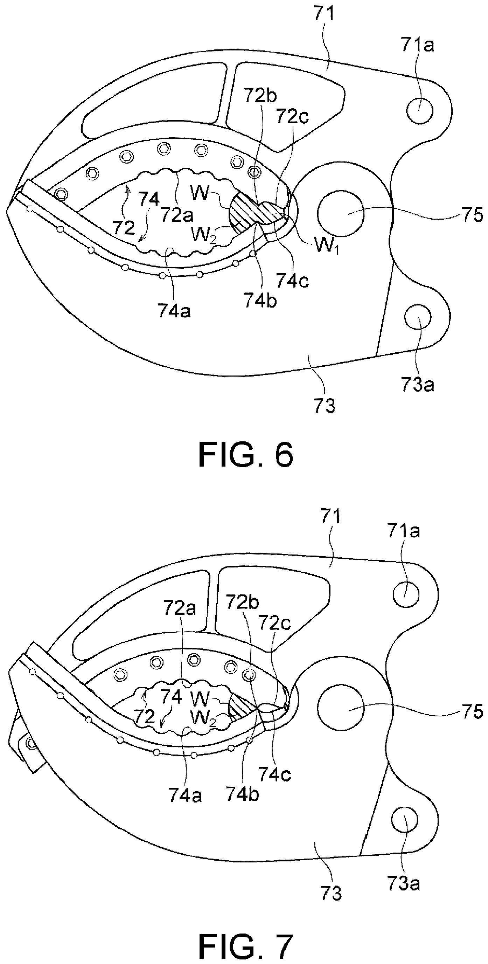

When cutting the cylindrical rod with the cutting member 70, as shown in FIG. 2, first, the cylindrical rod to be cut is made to contact the positioning portion 73b formed at the base portion of the second cutting part 73 to perform positioning of the cylindrical rod to be cut. Then, when the first cutting part 71 and the second cutting part 73 rotate around the shaft 75 in the direction of the arrows shown in FIG. 2 in a state where the cylindrical rod is in contact with the positioning portion 73b, the convex portion 72b of the blade part 72 and the convex portion 74b of the blade part 74 come into contact with the cylindrical rod, and these convex portion 72b and convex portion 74b sandwich the cylindrical rod from both sides. When the first cutting part 71 and the second cutting part 73 further rotate around the shaft 75 in the direction of the arrows shown in FIG. 2, the convex portion 72b and the convex portion 74b bit into the cylindrical rod. Because the cylindrical rod is positioned by being in contact with the positioning portion 73b, the convex portion 72b and the convex portion 74b bit into the cylindrical rod at the same position. A part (shown with a symbol W₁ in FIGS. 5 and 6) of the cylindrical rod that is closer to the base portions of the first cutting part 71 and the second cutting part 73 is cut first by the second cutting portion 72c of the blade part 72 and the second cutting portion 74c of the blade part 74. Thereafter, when the first cutting part 71 and the second cutting part 73 further rotate around the shaft 75 in the direction of the arrows shown in FIG. 2, a part (shown with a symbol W₂ in FIGS. 5 to 7) of the cylindrical rod that is away from the base portions of the first cutting part 71 and the second cutting part 73 is cut by the first cutting portion 72a of the blade part 72 and the first cutting portion 74a of the blade part 74. A cutting method of the cylindrical rod will be explained in detail later.

In this cutting device 10, when the pressurized oil is sent from the hydraulic pump 20 to the cutting member 70, the piston part 76 is pushed toward the left side in FIG. 2. When the piston part 76 is pushed toward the left side in FIG. 2, the base part 78 also moves in the left direction in FIG. 2, so that each of the cutting parts 71 and 73 rotates around the shaft 75 in the direction of the arrow shown in FIG. 2. In this way, after placing the cylindrical rod to be cut with the cutting member 70 between the pair of cutting parts 71 and 73, when the pressurized oil is sent from the hydraulic pump 20 to the cutting member 70, each of the cutting parts 71 and 73 rotates around the shaft 75 in the direction of the arrow shown in FIG. 2, and the cylindrical rod is cut.

More specifically, the oil chamber 77 is formed inside the piston part 76 in the cutting member 70. When the pressurized oil is sent from the third oil passage 50 to the oil chamber 77, the piston part 76 moves to the left side in FIGS. 2 and 3. The oil chamber 79 is also provided outside the piston part 76. When the pressurized oil is sent from the fourth oil passage 52 to the oil chamber 79, the piston part 76 moves to the right side in FIGS. 2 and 3.

Also, as shown in FIGS. 2 and 3, the hole 40 into which the spool 98 of the switching member 90 is inserted is provided in the cutting device 10. Each of the oil passages 30, 32, 50, and 52 communicates with this hole 40. A plurality of grooves extending along the circumferential direction of the hole 40 are formed on the peripheral wall of the hole 40. When the operating knob attaching part 96 is located at the neutral position, some of these grooves are blocked by the outer wall portion of the spool 98. On the other hand, when the operating knob attaching part 96 is positioned at the advanced position or the retreated position, all the grooves are open without being blocked by the outer wall portion of the spool 98. In the present embodiment, the position of the spool 98 in the vertical direction in FIG. 2 and FIG. 3 changes depending on the position of the operating knob 92 and the operating knob attaching part 96. Therefore, the oil passage that should communicate with each of the first oil passage 30 and the second oil passage 32 can be switched between the third oil passage 50 and the fourth oil passage 52.

In the present embodiment, a combination of the motor 16, the battery 17, the hydraulic pump 20, and the like constitutes a driving unit that operates the cutting member 70 so that each of the cutting parts 71 and 73 rotates around the shaft 75 in the mutually approaching direction or in the mutually separating direction.

An operation of the cutting device 10 having such a configuration will be explained below. More specifically, an operation for cutting the cylindrical rod such as the reinforcing rod with the cutting member 70 will be explained with reference to FIGS. 2 to 7. When cutting the cylindrical rod with the cutting member 70, the worker turns the operating knob 92 from its neutral position to the advanced position. Specifically, when the cutting device 10 is in standby, the operating knob 92 is located at the neutral position, and in this state, the protruding part 94 of the operating knob 92 faces directly upward as shown in FIG. 1. When the worker rotates the operating knob 92 in the counterclockwise direction in FIG. 1 so that the protruding part 94 rotates to the left in FIG. 1, the operating knob 92 is positioned at the advanced position. When the operating knob 92 is rotated to the advanced position, the operating knob attaching part 96 also rotates integrally with the operating knob 92. As a result, the spool 98 moves in the upward direction in FIG. 2 along the shaft direction thereof. In this manner, when the spool 98 moves in the upward direction in FIG. 2 along the shaft direction, the position of each of the grooves 98a provided on the outer peripheral surface of the spool 98 changes, and the grooves in the hole 40 that were closed by the spool 98 become open whereby the first oil passage 30 and the third oil passage 50 as feed pipes communicate with each other. As a result, when the hydraulic pump 20 is operated and the pressurized oil is sent from the oil chamber 28 of the hydraulic pump 20 to the first oil passage 30, the pressurized oil flows from the third oil passage 50 to the oil chamber 77 of the cutting member 70. When the pressurized oil is sent from the third oil passage 50 to the oil chamber 77 in this manner, the piston part 76 moves to the left side in FIG. 2 and the base part 78 advances to the left direction in FIG. 2, whereby each of the cutting parts 71 and 73 rotates around the shaft 75 in the direction of the arrow shown in FIG. 2.

When the spool 98 moves in the upward direction in FIG. 2 along the shaft direction, the position of each of the grooves 98a provided on the outer peripheral surface of the spool 98 changes, and the grooves in the hole 40 that were closed by the spool 98 become open whereby the second oil passage 32 and the fourth oil passage 52 as the return pipes communicate with each other. As a result, the return oil sent from the oil chamber 79 provided outside the piston part 76 of the cutting member 70 to the fourth oil passage 52 is returned from the second oil passage 32 to the oil chamber 28 of the hydraulic pump 20.

An operation for cutting the cylindrical rod with the blade parts 72 and 74 of the cutting parts 71 and 73 will be explained below with reference to FIGS. 4 to 7. FIG. 4 is a view showing a state at the instant the blade parts 72 and 74 of the cutting parts 71 and 73 contact with the cylindrical rod. As explained above, in each of the blade parts 72 and 74, the convex portions 72b and 74b have such a shape that the convex portions 72b and 74b protrude toward the other blade parts 72 and 74, and when the cutting parts 71 and 73 rotate around the shaft 75 in the direction of the arrows shown FIG. 2, the convex portions 72b and 74b advance more than the first cutting portions 72a and 74a and the second cutting portions 72c and 74c. Also, the length of the second cutting portions 72c and 74c of the blade parts 72 and 74 is generally smaller than the diameter of the cylindrical rod to be cut by the cutting member 70 of the cutting device 10 of the present embodiment. Therefore, after positioning the cylindrical rod to be cut by bringing the cylindrical rod to be cut into contact with the positioning portion 73b, when the first cutting part 71 and the second cutting part 73 rotate around the shaft 75 in the direction of the arrows shown in FIG. 2 while the cylindrical rod is in contact with the positioning portion 73b, as shown in FIG. 4, first, the convex portion 72b of the blade part 72 and the convex portion 74b of the blade part 74 come into contact with the cylindrical rod, and the convex portion 72b and the convex portion 74b sandwich the cylindrical rod from both sides.

Thereafter, when the first cutting part 71 and the second cutting part 73 rotate further around the shaft 75 in the direction of the arrows shown in FIG. 2, as shown in FIG. 5, the convex portion 72b of the blade part 72 and the convex portion 74b of the blade part 74 bit into the cylindrical rod. Then, from the state shown in FIG. 5, when the first cutting part 71 and the second cutting part 73 further rotate around the shaft 75 in the direction of the arrows shown in FIG. 2, as shown in FIG. 6, first, the cylindrical rod is cut by the second cutting portions 72c and 74c of the blade parts 72 and 74 at the part (that is, the part indicated with the symbol W₁ in FIG. 5) of the cylindrical rod closer to the base portion of each of the cutting parts 71 and 73 than the portion bitten by the convex portions 72b and 74b.

Thereafter, from the state shown in FIG. 6, when the first cutting part 71 and the second cutting part 73 further rotate around the shaft 75 in the direction of the arrows shown in FIG. 2, as shown in FIG. 7, the cylindrical rod is cut by the first cutting portions 72a and 74a of the blade parts 72 and 74 at the part (that is, the part indicated with the symbol W₂ in FIGS. 5 and 6) of the cylindrical rod that is away from the base portion of the each of the cutting parts 71 and 73 than the portion bitten by the convex portions 72b and 74b. As a result, the cylindrical rod is completely cut by the blade parts 72 and 74.

Thus, in the cutting device 10 according to the present embodiment, the blade parts 72 and 74 have the convex portions 72b and 74b, respectively. Each of the convex portions 72b and 74b protrudes toward the other blade part 72 or 74. Moreover, after performing the positioning of the cylindrical rod by bringing the cylindrical rod into contact with the positioning portion 73b, when the cutting parts 71 and 73 are rotated around the shaft 75 in the mutually approaching direction, the convex portions 72b and 74b first contact the cylindrical rod. Therefore, when cutting the cylindrical rod with the cutting member 70, each of the convex portions 72b and 74b are brought into contact with the cylindrical rod and then the cylindrical rod is cut in a plurality of stages. More specifically, first, the cylindrical rod is cut by the second cutting portions 72c and 74c of the blade parts 72 and 74 at the part (that is, the part indicated with the symbol W₁ in FIG. 5) of the cylindrical rod closer to the base portion of each of the cutting parts 71 and 73 than the portion bitten by the convex portions 72b and 74b, and the cylindrical rod is then cut by the first cutting portions 72a and 74a of the blade parts 72 and 74 at the part (that is, the part indicated with the symbol W₂ in FIGS. 5 and 6) of the cylindrical rod that is away from the base portion of the each of the cutting parts 71 and 73 than the portion bitten by the convex portions 72b and 74b. In this case, when the cylindrical rod is cut by the blade parts 72 and 74, a load is applied to each of the cutting parts 71 and 73 and a bending moment is generated in each of the cutting parts 71 and 73. However, even if each of the cutting parts 71 and 73 are bent, because the cutting of the cylindrical rod is performed in the plurality of stages, the bent cutting parts 71 and 73 gradually return to their original positions. As a result, scattering of the cut pieces of the cylindrical rod due to the force when the bent cutting parts 71 and 73 return to their original positions and / or occurrence of a loud cutting sound due to the hitting of the overlapping cutting parts 71 and 73 can be prevented. Moreover, before cutting the cylindrical rod with the cutting parts 71 and 73, the positioning of the cylindrical rod is performed by making the cylindrical rod contact the positioning portion 73b, and while the cylindrical rod is in contact with the positioning portion 73b, when the cutting parts 71 and 73 are rotated around the shaft 75 in the mutually approaching direction, the convex portions 72b and 74b contact the cylindrical rod, so that the convex portions 72b and 74b contact the cylindrical rod at the same position. As a result, because the convex portions 72b and 74b bit into the cylindrical rod at the same position, the cylindrical rod can be stably cut.

In particular, in the cutting device 10 according to the present embodiment, each of the blade parts 72 and 74 that have the convex portions 72b and 74b includes the first cutting portions 72a and 74a that are located away from the base portion of the pair of cutting parts 71 and 73 than the convex portions 72b and 74b, and the second cutting portions 72c and 74c located closer to the base portion of the pair of cutting parts 71 and 73 than the convex portions 72b and 74b. The blade parts 72 and 74 have such a shape that, when each of the cutting parts 71 and 73 are rotated around the shaft 75 in the mutually approaching direction, the convex portions 72b and 74b contact with the cylindrical rod and, first, a part of the cylindrical rod is cut by the second cutting portions 72c and 74c, and then the remaining part of the cylindrical rod is cut by the first cutting portions 72a and 74a. In this case, the cylindrical rod can be cut more reliably in a plurality of stages.

In the above explanation, it is mentioned that the blade parts 72 and 74 have the convex portions 72b and 74b, respectively; however, the configuration of the cutting device 10 of the present embodiment is not limited to this. In a cutting device according to a modification, a convex portion can be provided only on one blade part between the pair of blade parts, that is, a convex portion can be omitted from the other blade part. Even with the cutting device according to this modification, after the convex portion of one blade part contacts the cylindrical rod, the cylindrical rod is cut into a plurality of stages. As a result, scattering of the cut pieces of the cylindrical rod due to the force when the bent cutting parts return to their original positions and / or occurrence of a loud cutting sound due to the hitting of the overlapping cutting parts can be prevented.

Noted that, the configuration of the cutting device according to the present invention is not limited to the above-explained configuration, and the configuration can be modified in various manner.

For example, the cutting member 70 is not limited to the one that is operated by using the pressurized oil. In the cutting device according to the invention, it is also possible to use the cutting member, which cuts the cylindrical rod, that is operated by a power source that is other than a hydraulic pump. For example, the pair of cutting parts of the cutting member can be operated directly by a motor. Even in this case, by adopting the same shape for the cutting member as the cutting member 70 of the cutting device 10, when cutting the cylindrical rod with the cutting member operated by the power source other than the hydraulic pump, because the cylindrical rod is cut into a plurality of stages, it is possible to prevent occurrence of a loud cutting sound and / or scattering of the cut pieces.

## Claims

1. A cutting device comprising:
a cutting member that cuts a cylindrical rod, the cutting member having a pair of cutting parts rotatable around a common shaft in a mutually approaching direction and mutually separating direction; and
a driving member that operates the cutting member such that each of the cutting parts rotates around the shaft in the mutually approaching direction or in the mutually separating direction, wherein
a positioning portion that positions the cylindrical rod to be cut by contacting the cylindrical rod to be cut is arranged at a base portion of at least one of the pair of cutting parts,
each of the cutting parts of the cutting member has a blade part that opposes a blade part of the other cutting part and at least one of the blade parts has a convex portion that protrudes toward the other blade part, and
the convex portion has a shape such that the convex portion first contacts the cylindrical rod while the cylindrical rod has been positioned by being in contact with the positioning portion and then each of the cutting parts rotates around the shaft to move in the mutually approaching direction.

2. The cutting device according to claim 1, wherein
the blade part having the convex portion includes a first cutting portion positioned away from a base portion of the pair of cutting parts than the convex portion and a second cutting portion located near the base portion of the pair of cutting parts than the convex portion, and
the blade part has a shape such that, when the cylindrical rod is positioned by being in contact with the positioning portion and each of the cutting parts is rotated around the shaft to move in the mutually approaching direction, after the convex portion contacts the cylindrical rod, a part of the cylindrical rod is cut by the second cutting portion, and then the remaining part of the cylindrical rod is cut by the first cutting portion.

3. The cutting device according to claim 2, wherein the first cutting portion is curved in shape and the second cutting portion is recessed with respect to the first cutting portion.

4. The cutting device according to any one of claims 1 to 3, wherein the convex portion of the blade part has a shape such that when the cylindrical rod is positioned by being in contact with the positioning portion and each of the cutting parts is rotated around the shaft to move in the mutually approaching direction, after the convex portion contacts the cylindrical rod, the convex portion bites into the inside of the cylindrical rod.

5. The cutting device according to any one of claims 1 to 4, wherein each blade part of the pair of blade parts has the convex portion.

6. The cutting device according to any one of claims 1 to 5, wherein the driving member operates the cutting member by using pressurized oil.
